# EUROPÄISCHE PATENTSCHRIFT

(11) **EP 1 440 489 B1**
(45) Veröffentlichungstag und Bekanntmachung des Hinweises auf die Patenterteilung: **28.02.2007**
(21) Anmeldenummer: 02787531.9
(22) Anmeldetag: 31.10.2002
(51) Int. Cl.: H01M 8/02, H01M 2/18, H01M 8/10, H01M 8/24

(54) **MIKROBRENNSTOFFZELLENSYSTEM**
MICRO FUEL CELL SYSTEM
SYSTEME DE MICROPILES A COMBUSTIBLE

(30) Priorität: 02.11.2001 DE 10155349
(43) Veröffentlichungstag der Anmeldung: 28.07.2004
(73) Patentinhaber: Fraunhofer-Gesellschaft zur Förderung der angewandten Forschung e.V., 80686 München (DE)
(72) Erfinder: HAHN, Robert, 13355 Berlin (DE); SCHMITZ, Andreas, 55546 Fürfeld (DE); HEBLING, Christopher, Dr., 79110 Freiburg (DE)
(74) Vertreter: Pfenning, Meinig & Partner GbR
(86) Internationale Anmeldenummer: PCT/EP2002/012173
(87) Internationale Veröffentlichungsnummer: WO 2003/038935

(56) Entgegenhaltungen:
- WO-A-00/69007
- WO-A-01/41231
- WO-A-01/41239
- WO-A-99/60642
- DE-A- 10 003 682
- US-A- 5 336 570
- WOO YOUNG SIM ET AL: "FABRICATION OF MICRO POWER SOURCE (MPS) USING A MICRO DIRECT METHANOL FUEL CELL (MUDMFC) FOR THE MEDICAL APPLICATION" TECHNICAL DIGEST. MEMS. IEEE INTERNATIONAL CONFERENCE ON MICRO ELECTRO MECHANICAL SYSTEMS, XX, XX, 21. Januar 2001 (2001-01-21), Seiten 341-344, XP001023800

## Beschreibung

Die vorliegende Erfindung betrifft ein Mikrobrennstoffzellensystem nach dem Oberbegriff des Anspruches 1 sowie ein Verfahren zu dessen Herstellung nach Anspruch 13.

Es sind Mikrobrennstoffzellensysteme bekannt, welche eine Membran-Elektroden-Einheit aufweisen, welche jeweils kathoden- und anodenseitig mit einer Stromableiterfolie bedeckt ist, wobei die Stromableiterfolien jeweils mindestens eine gasdurchlässige Öffnung zur Zuleitung z.B. von molekularem Wasserstoff auf der Anodenseite aufweisen bzw. zur Zuleitung von Luftsauerstoff auf der Kathodenseite.

Die US-Patentschrift 6 127 058_zeigt eine solche gattungsgemäße Mikrobrennstoffzelle. In einem dort geschilderten ersten Ausführungsbeispiel werden zwischen der ionenleitfähigen Polymermembran und den Stromableiterfolien Graphitpapiere bzw. -gewebe vorgesehen zur Diffusion eingeleiteter Gase. Hierbei steht im Vordergrund, dass durch die gasdurchlässige Öffnung eingeleitete Gase gleichmäßig auf der MEA verteilt werden sollen, um somit einen möglichst guten Wirkungsgrad der Brennstoffzelle zu gewährleisten. Hierbei ergeben sich jedoch mehrere Schwierigkeiten. Insbesondere bei sehr kleinen Mikrobrennstoffzellen bzw. planar nebeneinander liegenden Brennstoffzellen (wie sie auch in der US-Patentschrift 6 127 058 beschrieben sind) stellt das Einlegen dieser Diffusionsschichten ein Kostenhindernis dar. Zur optimalen Funktion der Brennstoffzelle ist es nämlich nötig, die Diffusionslagen immer exakt auf das zugedachte Fenster der MEA auszurichten. Nachteilig ist außerdem, insbesondere bei Methanolbetriebenen Brennstoffzellen, dass durch die Diffusionsschicht die Brennstoffstelle anodenseitig ein hohes Eigenvolumen aufweist, so dass die Brennstoffzelle ein relativ träges Regelungsverhalten aufweist. Zu dem ist zu beachten, dass insbesondere bei nicht sorgfältig eingelegten Gasdiffusionslagen die elektrische Leitung nicht auf voller Fläche gewährleistet ist, so dass sich auch hier Wirkungsgradeinbußen ergeben.

Die WO 01/41231 A2 betrifft eine elektrochemische Zelle, inbesondere Brennstoffzelle, aus mindestens einer Einzelzelle, wobei diese Einzelzelle folgende Bestandteile umfasst: eine ionenleitende Elektrolytmembran, auf deren beiden Flachseite jeweils eine Elektrode aufgebracht, einen anodenseitige Strom- und Gasverteilerstruktur sowie eine kathodenseitige Strom- und Gasverteilerstruktur, wobei jede der beiden Strom- und Gasverteilerstrukturen ohne Zwischenschaltung eines Stromkollektors oder ähnlichem unmittelbar benachbart zu der jeweiligen Elektrode angeordnet ist, und die Strom- und Gasverteilerstrukturen eine mikroskopische Kanalstruktur mit mindestens einer Strukturgröße kleiner 500 µm aufweisen. Die dort offenbarte Gasverteilerstruktur weist allerdings keine Polymerschicht auf, in die Diffusionskanäle eingearbeitet sind und deren Stege metallisiert sind. Insgesamt hat dieser vorbekannte Stand der Technik den Nachteil, dass die dort gezeigten Gestaltungen insbesondere großindustriell schwerer herzustellen sind und dass die Gasverteilerstrukturen in der Regel nicht leicht, flexibel und korrosionsbeständig sind.

Der vorliegenden Erfindung liegt daher die Aufgabe zugrunde, ein Mikrobrennstoffzellensystem zu schaffen, welches einerseits einfach und kostengünstig herstellbar ist und außerdem auch im Methanolbetrieb ein sehr direktes Regelungsverhalten zeigt.

Diese Aufgabe wird in Bezug auf das Mikrobrennstoffzellensystem selbst durch Anspruch 1 sowie in Bezug auf das Herstellverfahren durch Anspruch 13 gelöst.

Dadurch, dass bei einem erfindungsgemäßen Mikrobrennstoffzellensystem mindestens auf einer der Stromableiterfolien auf der der MEA zugewandten Seite Diffusionskanäle angeordnet sind zur Ersetzung poröser oder vliesförmiger Gasdiffusionslagen und alleiniger Sicherstellung der Feinstdiffusion von Gas auf der MEA, wobei die Diffusionskanäle mit der gasdurchlässigen Öffnung zur Durchleitung von Gas verbunden sind und Stege der Diffusionskanäle mit einer elektrisch leitfähigen Oberfläche zur Kontaktierung der MEA versehen sind, wird eine direkte Verteilung von Gas ohne Zwischenschaltung einer Gasdiffusionslage ermöglicht.

Die Kanäle sind hierbei so feingliedrig und so als in sich geschlossenes Kanalsystem über die Gesamtfläche der MEA verteilt, dass zur Feinstverteilung von Gas keine weiteren Strukturen nötig sind. In der vorliegenden Erfindung wird hierbei unter einer MEA eine lediglich mit einer Katalysatorschicht versehene ionenleitfähige Schicht verstanden. Die MEA hat hierbei keine integrierte Karbonvlieslage, welche eine Feinstdiffusion von Gas bewirken würde. Es ist vollkommen ausreichend, dass die erfindungsgemäße MEA eine glatte Oberfläche hat, so dass die Aufgabe der Gasdiffusion allein durch die erfindungsgemäßen Diffusionskanäle, welche integraler Bestandteil der Stromableiterfolien sind, gewährleistet wird.

Neben der Aufgabe der Gasdiffusion wird hierbei durch die elektrisch leitfähigen Stegoberflächen erreicht, dass zwischen Stromableiterfolie und der MEA ein niedriger ohmscher Widerstand besteht. Der ohmsche Widerstand wird nicht durch einen zwischengelegten Körper, wie etwa eine Karbonvlies-Diffusionslage er höht. Der erfindungsgemäße Abstand der Kanäle ist so gewählt, dass einerseits durch die geringen Kanalbreiten und somit den kurzen Abstand der Stege eine gute Ableitung des Stroms von der MEA und somit ein geringer ohmscher Widerstand festzustellen ist. Andererseits wird durch die kleinen Strukturen sichergestellt, dass vollflächig über die MEA eine ausreichende Gasversorgung gegeben ist. Hierbei wird das Verhältnis von Kanalbreiten zu Stegbreiten so gewählt, dass die ohmschen Verluste beim Übergang von der MEA zur Stromableiterschicht weniger als ein Prozent betragen.

Ein besonderer Vorteil der Erfindung besteht für methanolbetriebene Brennstoffzellensysteme, da hier keine volumenerhöhende Pufferzone durch eine Gasdiffusionslage besteht. Das im System gegebene Eigenvolumen ist anodenseitig sehr klein ausführbar, damit ergibt sich insbesondere für methanolbetriebene Brennstoffzellen ein direktes Regelungsverhalten (d.h. im Methanolbetrieb (DMFC) entstehen bei Reduzierung der Last geringere Verluste durch Methanoldurchtritt, da das Speichervolumen begrenzt ist, damit ergibt sich ein günstigeres dynamisches Verhalten und ein höherer Wirkungsgrad).

Vorteilhafte Weiterbildungen der vorliegenden Erfindung werden in den abhängigen Ansprüchen gezeigt.

Eine besonders vorteilhafte Ausführungsform sieht vor, dass das erfindungsgemäße Mikrobrennstoffzellensystem aus mehreren nebeneinander angeordneten Brennstoffzellen besteht, wobei diese elektrisch miteinander verschaltet sind. Hier zeigt sich der volle Wert der Erfindung, da insbesondere bei vielen nebeneinander liegenden kleinbauenden Mikrobrennstoffzellen die Anbringung von gesonderten Gasdiffusionslagen eine kostenaufwendige und Fehler verursachende Maßnahme darstellt. Mit dem erfindungsgemäßen Aufbau ist es jedoch möglich, im Wesentlichen nur drei Elemente (d.h. die beiden Stromableiterfolien und die MEA) an ihren Rändern miteinander auszurichten und aufeinander zu legen (hier kann auf Verfahren der Halbleiterindustrie oder der Elektronik/Leiterplatten-Fertigung zurückgegriffen werden). Hierbei bietet sich auch eine automatisierte Herstellung an, wobei auf Herstellungsmethoden der Halbleiterindustrie zurückgegriffen werden kann. Hierbei hat sich außerdem gezeigt, dass es sich anbietet, bei serienverschalteten Mikrobrennstoffzellen diese nicht lediglich über eine Kontaktfläche miteinander zu verbinden. Eine Verbindung über mehrere Kontaktflächen, welche auf jeweils weit voneinander entfernten Punkten der Brennstoffzelle angeordnet sind, bewirkt eine drastische Reduzierung des ohmschen Widerstandes.

Eine weitere vorteilhafte Weiterbildung sieht vor, dass die Breite der Diffusionskanäle, d.h. das Abstandsmaß an der breitesten Stelle des Kanals, welches regelmäßig an der Grenze zur MEA gegeben ist, zwischen 1 und 300 µm besteht, vorzugsweise zwischen 10 und 100 µm. Hierbei hat es sich als besonders vorteilhaft erwiesen, dass die Kanäle mäanderförmig gestaltet sind, wobei von einer gaseinleitenden gasdurchlässigen Öffnung ausgehend der Kanal mit wachsender Entfernung von dieser Öffnung hin schmäler wird. Dies minimiert den Druckabfall über die Strecke hinweg, so dass an sämtlichen Stellen des Kanals ungefähr gleiche Mengen von Gas an die MEA abgebbar sind.

Eine weitere vorteilhafte Ausführungsform sieht vor, dass die Stromableiterfolien eine Polymerschicht (quasi als "Gerüst") aufweisen. In diese Polymerschicht sind Vertiefungen durch Laserbearbeitung, Nassätzen, reaktives Ionenätzen oder dergleichen kostengünstig herstellbar. Nach Herstellung dieser Vertiefungen ist dann durch eine Metallisierung mit leitfähigen Metallen wie etwa Gold, welche eine besonders gute Leitfähigkeit haben, eine korrosionsbeständige und widerstandsarme Abgreifung von Strom möglich. Selbstverständlich ist jedoch auch möglich, die leitfähigen Metallstrukturen auf eine glatte Polymerschicht aufzubringen und somit die Kanäle zwischen den leitfähigen Strukturen zu erzeugen. Außerdem ist es zur weiteren Senkung der Herstellungskosten möglich, statt z.B. aufgedampfter Metallstrukturen das Aufbringen z.B. einer vorgestanzten Metallstruktur vorzusehen.

Eine weitere vorteilhafte Ausführungsform sieht vor, dass im Bereich der Kanalstrukturen oder der MEA Elemente zum Wassermanagement der Brennstoffzelle vorgesehen werden. Dies kann zum einen dadurch geschehen, dass im Bereich der MEA poröse Bauteile zur Einbindung von Reaktionswasser angeordnet sind. Hierdurch wird ein einerseits überschüssiges Reaktionswasser abgesaugt und andererseits langfristig ein Austrocknen der MEA verhindert, so dass ein leichteres Anspringen der Brennstoffzelle gegeben ist. Zur noch gezielteren Wasserführung ist es außerdem möglich, z.B. die Kanalinnenwände (nicht die Stegspitzen, welche mit der MEA elektrisch leitend verbunden sein sollen) mit einer hydrophilen oder hydrophoben Substanz (etwa Nafion oder Teflon). zu verbinden. Ebenso kann die MEA bereichsweise zur Schmutz- bzw. Wasserabweisung zumindest bereichsweise imprägniert sein.

Weitere vorteilhafte Weiterbildung der vorliegenden Erfindung werden in den übrigen Ansprüchen angegeben.

Die vorliegende Erfindung wird nun anhand mehrerer Figuren erläutert. Es zeigen:
- Fig. 1: einen Querschnitt durch ein erfindungsgemäßes Mikrobrennstoffzellensystem,
- Fign. 2a und 2b: zwei Ausführungsformen einer erfindungsgemäßen kathodenseitigen Stromableiterfolie,
- Fig. 2c: eine erfindungsgemäße MEA,
- Fig. 2d: eine Ausführungsform einer anodenseitigen Stromableiterfolie,
- Fig. 3: eine Draufsicht auf ein erfindungsgemäßes Mikrobrennstoffzellensystem,
- Fig. 4: eine weitere Ausführungsform eines erfindungsgemäßen Mikrobrennstoffzellensystems in der Draufsicht,
- Fig. 5: ein erfindungsgemäßes Mikrobrennstoffzellensystem im verbauten Zustand.

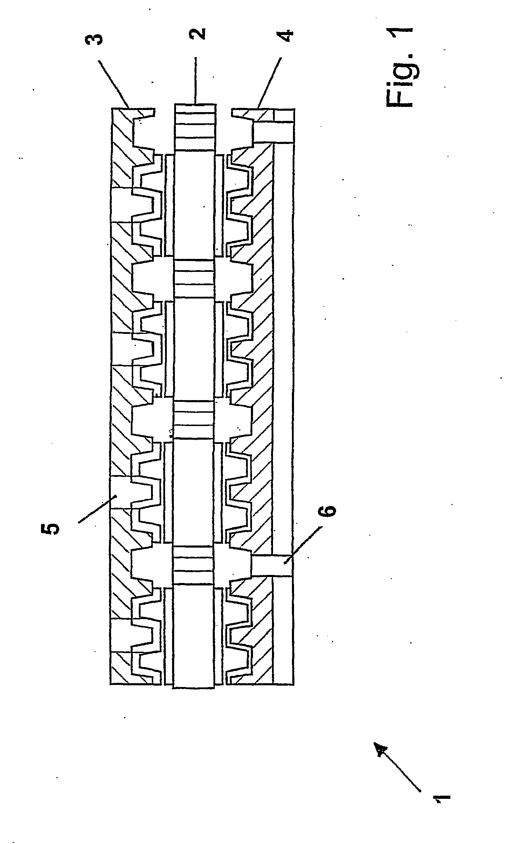

Fig. 1 zeigt ein erfindungsgemäßes Mikrobrennstoffzellensystem 1. Hierbei handelt es sich um ein Mikrobrennstoffzellensystem mit einer Membran-Elektroden-Einheit (MEA) 2, die jeweils kathoden- und anodenseitig mit einer Stromableiterfolie 3 bzw. 4 bedeckt ist. Die Stromableiterfolien 3 bzw. 4 weisen jeweils mehrere Öffnungen 5 bzw. 6 auf. Anodenseitig ist durch diese Öffnungen 6 z.B. molekularer Wasserstoff (in anderen Ausführungsformen ist auch Methanolbetrieb möglich) zuführbar. Außerdem ist noch eine zweite Öffnung zur Ableitung überschüssigen Wasserstoffes aus dem Anodenraum vorgesehen. Die Stromableiterfolie 3 weist eine Vielzahl von Öffnungen 5 zur Zuführung von Luftsauerstoff auf. Beide Stromableiterfolien 3 und 4 haben jeweils auf ihrer der MEA zugewandten Seite Diffusionskanäle bzw. Kanalsysteme, welche Gasdiffusionslagen ersetzen und somit allein die Feinstdiffusion von Gas auf der MEA sicherstellen. Die Diffusionskanäle sind mit den Öffnungen 5 bzw. 6 jeweils verbunden und die Spitzen bzw. Stege der Diffusionskanäle sind jeweils mit Elektrodenflächen der MEA in Kontakt.

Im Folgenden werden die einzelnen Komponenten der in Fig. 1 gezeigten Mikrobrennstoffzelle im Einzelnen erläutert.

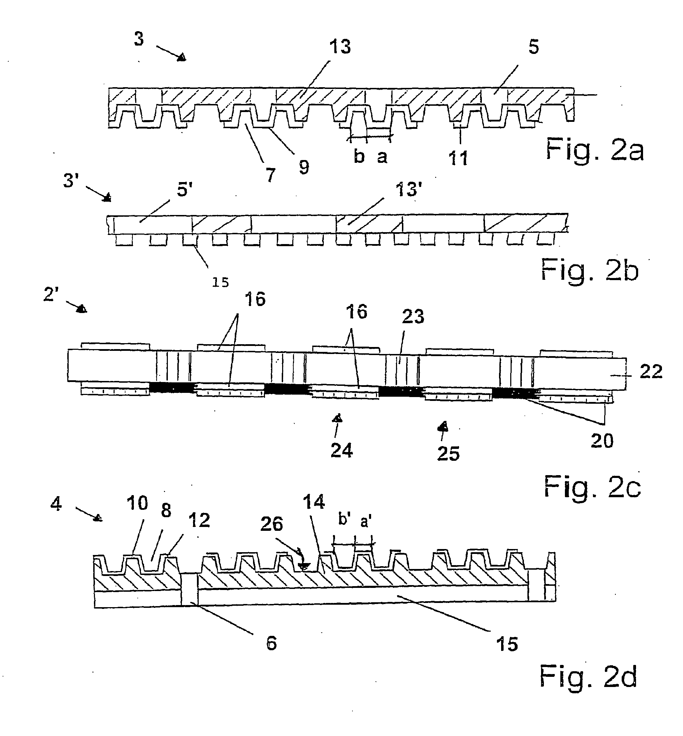

Fig. 2a zeigt die kathodenseitige Stromableiterfolie 3. Diese weist eine Polymerschicht 13 auf. Die Polymerschicht 13 weist eine Mehrzahl von Öffnungen 5 auf. Je nach Anzahl dieser Löcher sind kathodenseitig mehrere Betriebsweisen möglich. Zum einen ist bei Vorsehung weniger Löcher vorzugsweise Druckluftzuführung (wie anodenseitig) möglich. Bei einer Vielzahl von Öffnungen sind auch Luft atmende Brennstoffzellen realisierbar (siehe unten Fig. 2b). Die Stromableiterfolie weist Diffusionskanäle 7 auf, welche metallisch beschichtet sind (statt einer solchen metallischen Beschichtung ist es in sämtlichen Ausführungsbeispielen möglich, eine elektrisch leitfähige Schicht aus anderem Material vorzusehen). Die Vertiefungen in der Polymerschicht 13, auf welche diese Metallisierungen 11 aufbauen, sind z.B. durch Laserbearbeitung, Nassätzen, reaktives Ionenätzen oder dergleichen hergestellt worden. Die elektrisch leitfähigen Oberflächen der Diffusionskanäle 7 sind auf diese Vertiefungen aufgebracht worden. Dieser Auftrag kann durch Sputtern, Aufdampfen, galvanische Verfahren, Bekeimung oder stromlose Abscheidung erfolgen. Wichtig ist, dass die später mit den Elektroden 16 der MEA in Verbindung stehenden Stege 9 der Kanäle mit einer elektrisch hochleitenden Schicht 11, z.B. aus Gold, belegt sind. Die Breite b der Diffusionskanäle 7 beträgt hierbei zwischen 1 und 300 µm, vorzugsweise zwischen 10 und 100 µm. Gemessen wird dieser Abstand, wie in Fig. 2a gezeigt, zwischen den der MEA am nächsten liegenden Eckpunkten. In einer bevorzugten Ausführungsform sind die Diffusionskanäle 7 mäanderförmig gestaltet, wobei in Längsrichtung des Kanals (d.h. senkrecht zur Blattebene) dieser zur Minimierung von Druckabfall im System mit wachsender Entfernung schmäler wird. So ist es z.B. möglich, dass der Kanal mit einigen 100 µm Breite beginnend schließlich bei einer Restbreite von 10 µm endet.

Es ist außerdem noch zu erwähnen, dass die Metallisierung 11 auf der Diffusionskanaloberfläche nicht durchgehend ist über die gesamte zur MEA hin orientierte Polymerschicht, sondern nur bereichsweise erfolgt ist, und zwar in den mit den Elektroden 16 der MEA sich deckenden Bereiche. Zum Wassermanagement in dem Mikrobrennstoffzellensystem ist es möglich, insbesondere die Innenflanken der Metallisierung 11 (also nicht im Bereich der Stege) mit einer hydrophilen oder hydrophoben Schicht z.B. aus Nafion oder Teflon zu versehen, um einen Wassereinlagerung an diesen Stellen und damit eine Versperrung des Kanals (welcher von den nebeneinander liegenden Vertiefungen, welche jeweils gemeinsam beschichtet sind mit der Metallisierung 11) zu verhindern.

Fig. 2b zeigt eine weitere Ausführungsform einer erfindungsgemäßen Stromableiterfolie, eine Stromableiterfolie 3'. Diese ist als eine im Wesentlichen glatte Polymerschicht 13' ausgeführt, in welche großvolumige Öffnungen 5' eingebracht sind. An der der MEA zugewandten Seite der Polymerschicht 13' ist eine durchgängig netzförmige Metallmaske 15 angebracht. Diese Metallmaske stellt sicher, dass an der Kathode eine homogene Stromableitung überall möglich ist und diese nicht durch Löcher 5' unterbrochen ist. Die Stromableiterfolie 3' ist eine "selbstatmende", d.h. dass die Öffnungen 5' mit der Umgebungsluft verbunden sind und somit das Brennstoffzellensystem seinen Sauerstoffbedarf aus der Umgebungsluft deckt.

Fig. 2c zeigt eine MEA 2', welche eine Abwandlung der MEA 2 aus Fig. 1 darstellt. Diese weist eine Grundstruktur in Form einer protonenleitfähigen Polymermembran 22 auf, in der isolierende Bereiche, d.h. für den Protonen- und Wassermolekültransport ungeeignete Bereiche 23 vorgesehen sind. Die Herstellung dieser isolierenden Bereiche aus der insgesamt protonenleitfähigen Polymermembran ist etwa Laser-Temperaturbehandlung, durch Thermokompression mit einem Stempelwerkzeug oder z.B. durch eine spezielle Beschichtung bzw. Tränkung möglich. Der isolierende Bereich 23 trennt.zwei einzelne Mikrobrennstoffzellen 24 und 25 voneinander ab. Die Einzelbrennstoffzellen weisen jeweils in Richtung der Stromableitfolien 3 bzw. 4 Elektroden 16 auf, welche aus einer im Wesentlichen nicht porösen Katalysatorschicht bestehen. D.h., dass nicht durch z.B. eine Eigenporosität dieser Katalysatorschichten eine flächige Gasverteilung innerhalb dieser Elektroden 16 möglich ist. Die Aufgabe der Gasdiffusion wird allein durch die Diffusionskanäle der Stromableiterfolien übernommen. Die als Katalysatorschichten ausgeführten Elektroden 16 der nebeneinander liegenden Mikrobrennstoffzellen 24 und 25 sind auf jeweils einer Seite der MEA nicht miteinander elektrisch verbunden. Die Herstellung einer solchen MEA kann hierbei entweder so erfolgen, dass bereits bei der Herstellung lediglich bereichsweise eine Katalysatorschicht zur Erzeugung der Elektroden 16 hergestellt wird. Alternativ ist es auch möglich, eine durchgängig mit einer Katalysatorschicht beschichtete Polymermembran bereichsweise, etwa durch mechanische Bearbeitung oder reaktives Ionenätzen in diesem Bereich elektrisch zu isolieren.

Auf der Anodenseite der MEA 2' ist diese zusätzlich mit weiteren Schichten versehen. Diese sind so ausgeführt, dass sie zwar wasser- bzw. ionenleitfähig sind, allerdings kein Methanol hindurchlassen. In alternativen Ausführungsformen ist es möglich, die Katalysatorschicht auch selbst als Methanolbarriere auszuführen, d.h. dass diese somit eine kombinierte Aufgabe (Katalysator, Elektrode sowie Methanolbarriere) innehat. Zum besseren Wassermanagement sind außerdem im Bereich der MEA poröse Bauteile zur Einbindung von. Reaktionswasser auf der Kathodenseite zwischen Stromableiterfolie und MEA einlegbar, des Weiteren ist es auch möglich, die freiliegende Elektrodenoberfläche 16 zur Schmutz- bzw. Wasserabweisung zumindest bereichsweise zu imprägnieren.

Fig. 2d zeigt eine anodenseitige Stromableiterfolie 4. Bezüglich der Diffusionskanäle 8, der Stege 10, der elektrisch leitfähigen Oberfläche/Metallisierung 12 sowie der Breitenmaße b' bzw. a' und der Polymerschicht 14 gilt sämtlich das oben für die Kathodenseite Gesagte, sofern im Folgenden nichts anderes ausgeführt wird. Die anodenseitige Stromableiterfolie 4 weist lediglich zwei Öffnungen 6 auf, welche zum Einbringen von Reaktionsmedium bzw. Ausbringen von überflüssigem Reaktionsmedium dienen. Als Reaktionsmedien kommen hierbei vorteilhafte molekularer Wasserstoff oder Methanol in Betracht. Insbesondere bei der Verwendung von Methanol zeigt sich der Vorteil, dass das Eigenvolumen der Mikrobrennstoffzelle im Anodenraum deutlich verringert ist gegenüber Mikrobrennstoffzellen mit eingelegter Gasdiffusionslage. Die Stromableiterfolie 4 weist auf ihrer der MEA abweisenden Seite eine Metallmaske 15 auf. Innerhalb des Anodenraums vorliegender Wasserstoff kann nicht durch die Polymerschicht 14 in Richtung 26 aus dem Anodenraum entweichen, die Metallfolie/Beschichtung dient hier als Diffusionsblocker.

Zur Herstellung der Stromableiterfolie 4 sind (dies gilt auch für die Stromableiterfolie 3) aus der Halbleiterherstellungstechnik und der Leiterplattentechnologie bekannte Verfahren anwendbar. So ist es möglich, dass eine beidseitig ebene Polymerplatte (aus welcher später durch Bearbeitung die Polymerschicht 14 hervorgeht) vor ihrer Bearbeitung auf eine auf einem Wafer befindliche Metallmaske 15 geklebt wird und nach Herstellung der Vertiefungen für die Kanäle 8 bzw. Aufbringen der elektrisch leitfähigen Schichten/Metallisierungen 12 der Wafer wieder entfernt wird. Eine kostengünstige Herstellung in größerer Stückzahl ist aber auch über Rollprozesse ("Rolle zu Rolle") möglich. Schließlich ist auch das abschlie-ßende Einbringen der Öffnungen 6 in die Stromableiterfolie durch Laser- oder Wasserstrahlbohrungsvorgänge oder reaktives Ionenätzen bzw. mechanische Verfahren möglich.

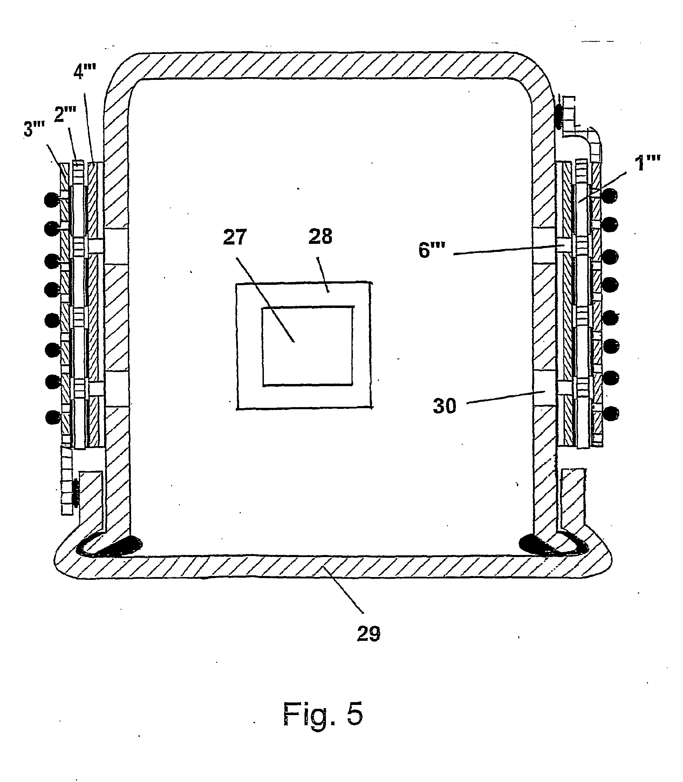

Die Herstellung des fertigen Mikrobrennstoffzellensystem 1 aus den in Fign. 2a bis 2d gezeigten Komponenten erfolgt dann schließlich durch Verkleben bzw. Verpressen der Stromableiterfolien auf der MEA. Hierbei wird insbesondere die anodenseitige Stromableiterfolie 4 mit den Stegen 10 direkt auf die MEA 2 aufgebracht. Der zur einwandfreien Funktion des Mikrobrennstoffzellensystems notwendige Druck der Stromableiterfolien auf die MEA ist jedoch auch durch Andruck dieser Schichtung auf gekrümmte Flächen möglich, hierbei kann die Flexibilität der erfindungsgemäßen Schichten ausgenützt werden (siehe auch Fig. 5).

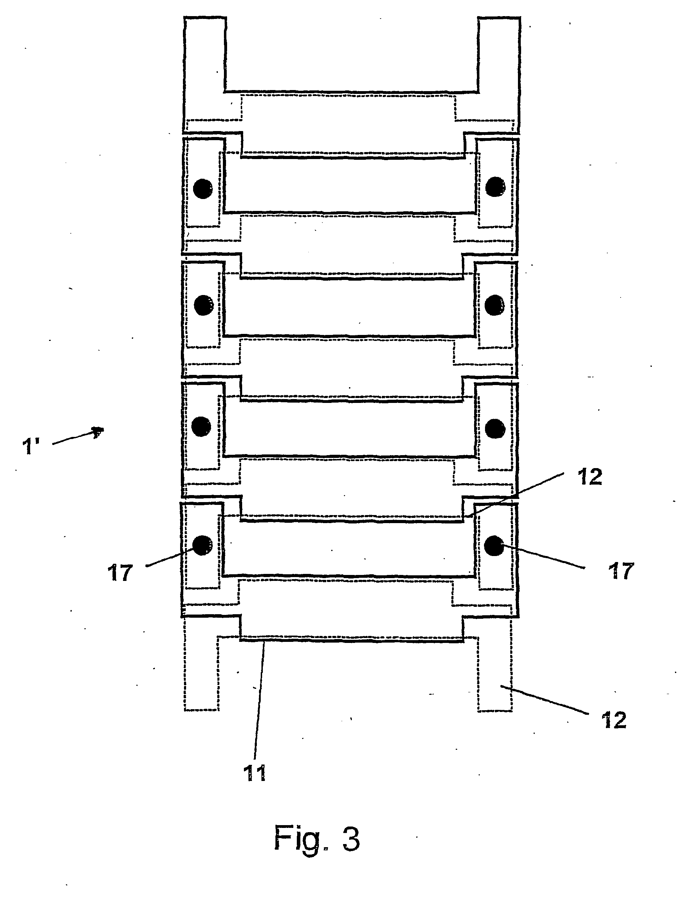

Fig. 3 in der Draufsicht ein erfindungsgemäßes Mikrobrennstoffzellensystem 1'. Hierbei stellen die mit durchgehenden Strichen U-förmig umrandeten Bereiche die Metallisierungen 11 auf der kathodenseitigen Stromableiterfolie 3 dar. Die strichlinierten U-förmigen Bereiche zeigen die metallisierten Bereiche 12 der anodenseitigen Stromableiterfolie 4. Fig. 3 zeigt eine Draufsicht, d.h. dass die Kathodenseite, wie in Fig. 1 gezeigt, oberhalb der MEA und die Anodenseite unterhalb der MEA liegt. Beide Metallisierungen sind über Kontaktpunkte 17 miteinander verbunden, so dass in Fig. 3 eine Serienschaltung der nebeneinander liegenden Mikrobrennstoffzellen erkennbar ist.

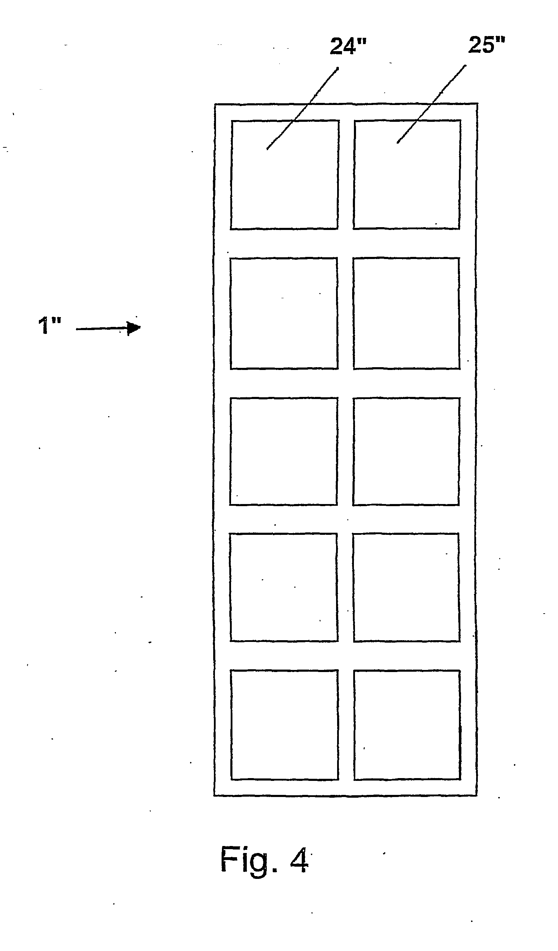

Fig. 4 zeigt eine weitere Ausführungsform eines erfindungsgemäßen Mikrobrennstoffzellensystems in schematischer Form. Hierbei wird erkennbar, dass nicht nur eine einfache eindimensionale Reihenschaltung der Mikrobrennstoffzellen (hier z.B. 24" und 25") möglich ist, sondern auch eine zweidimensionale Anordnung.

Fig. 5 zeigt eine weitere Ausführungsform eines erfindungsgemäßen Mikrobrennstoffzellensystems 1" '. Hierbei ist ein im Wesentlichen zylindrisches Behältnis 29 gezeigt. Innerhalb dieses Behältnisses 29 ist ein Brennstofftank, z.B. für molekularen Wasserstoff, 27 gezeigt. Um diesen Brennstofftank 27 herum ist eine Regeleinrichtung 28 angeordnet, welche nach Maßgabe einer nicht dargestellten Steuereinrichtung den Gasfluss aus dem Brennstofftank 27 durch die Öffnungen 30 hindurch zu der um den Zylinder 29 gewickelten Brennstoffzelle 1"' hin steuert. Die Brennstoffzelle 1" ' entspricht in ihrem Aufbau im Wesentlichen der in Fig. 1 gezeigten (allerdings schematisch vereinfacht). Das Mikrobrennstoffzellensystem 1"' ist um das Behältnis 29 so gespannt, dass die beiden Stromableiterfolien 3"' und 4"' den gewünschten Druck auf die dazwischen liegende MEA 2"' ausüben. Die Öffnungen 6"' der anodenseitigen Stromableiterfolie 4"' stehen hierbei mit den Öffnungen 30 im Behältnis 29 zur Versorgung mit Brennstoff in Verbindung. Die kathodenseitige Stromableiterfolie 3"' ist luftatmend ausgeführt. Insbesondere bei dieser Bauform wird deutlich, dass mit dem erfindungsgemäßen Mikrobrennstoffzellensystem kleinbauende und flexible Brennstoffzellensysteme möglich sind.

Es gibt noch weitere vorteilhafte Ausführungsformen zur Herstellung des erfindungsgemäßen Mikrobrennstoffzellensystems.

So kann die Stromableiterfolie mit Kanalstrukturen und Öffnungen auf einem Wafer hergestellt werden, auf den vorher eine Opferschicht/Opferstruktur aufgebracht wurde. Nach Fertigstellung kann hier die Opferschicht entfernt werden, es entsteht auf diese Weise eine freitragende Stromableiterfolie (z.B. Bezugsnummern 3 und 4 in Fig. 1).

So ist auch ein Verfahren zur Herstellung eines Mikrobrennstoffzellensystems bekannt, wobei auf die MEA zunächst eine Opferstruktur aufgebracht wird, auf welche zur Ausbildung der Stromableiterfolie durch direkte Abscheide- und Strukturierungsverfahren weitere Schichten aufgebracht werden und anschließend die Opferstruktur zur Freilegung von Diffusionskanälen oder dergleichen entfernt wird.

Dieses Verfahren ist sowohl für Anoden- als auch Kathodenseite anwendbar, es ist möglich, lediglich eine Seite mit diesem Herstellungsverfahren herzustellen und die andere Seite mit einem anderen der oben genannten Verfahren herzustellen. Es ist besonders vorteilhaft, dass auch ohne mechanisches Andrücken bereits fertiger Stromableiterfolien auf die MEA der elektrische Kontakt zwischen diesen Bauteilen hergestellt werden kann.

Hierbei wird z.B. die MEA-Folie zuerst strukturiert und dann mittels einer Opferschicht/Opferstruktur auf einem Wafer befestigt. Danach werden mittels Lithographie, Sputtern, Galvanik, Siebdruck oder dergleichen sowie mit Hilfe von weiteren Opferschichten die Kanalstrukturen und Öffnungen additiv aufgebracht, so dass die Stromableitungs- und Gasverteilungsstruktur (3 oder 4 in Fig. 1) direkt durch die Herstellung fest mit der MEA verbunden ist. Danach wird die Opferschicht entfernt, und die Folie (in diesem Fall jetzt 2 und 3 oder 2 und 4, Fig. 1) mit der anderen Seite auf dem Wafer verbunden und die noch verbliebenen Strukturen (3 oder 4) der anderen Seite hergestellt.

Hauptvorteil dieser Herstellung ist es, dass kein mechanischer Anpressdruck zur Erzielung eines kleinen Kontaktwiderstandes notwendig ist. Durch das direkte Aufsputtern, Aufdampfen, chemisch galvanische Abscheiden oder Ausdrucken wird in einem Arbeitsgang eine gute Haftung zur MEA-Oberfläche und ein kleiner Kontaktwiderstand sowie auch eine Abdichtung für die Medien hergestellt. Mit Hilfe von strukturierten Opferschichten, die anschließend entfernt werden, lassen sich auch Kanäle, die vor allem auf der Anodenseite benötigt werden, herstellen. Es kann dieses Verfahren auch nur für eine Seite (3 oder 4, Fig. 1) eingesetzt werden, während die andere Seite wie bisher beschrieben hergestellt wird.

## Patentansprüche

1. Mikrobrennstoffzellensystem (1) mit einer Membran-Elektroden-Einheit (MEA) (2), die jeweils kathoden- und anodenseitig mit einer Stromableiterfolie (3, 4) bedeckt ist, wobei die Stromableiterfolien jeweils mindestens eine gasdurchlässige Öffnung (5, 6) aufweisen, wobei mindestens auf einer der Stromableiterfolien (3, 4) auf der der MEA (2) zugewandten Seite Diffusionskanäle (7, 8) angeordnet sind zur Ersetzung von Gasdiffusionslagen und alleiniger Sicherstellung der Feinstdiffusion von Gas auf der MEA, wobei die Diffusionskanäle mit der gasdurchlässigen Öffnung (5, 6) zur Durchleitung von Gas verbunden sind und Stege (9, 10) der Diffusionskanäle mit einer elektrisch leitfähigen Oberfläche(11, 12) zur Kontaktierung der MEA versehen sind,
**dadurch gekennzeichnet,**
**dass** die Stromableiterfolien (3, 4) eine Polymerschicht (13, 14) aufweisen, an derer der MEA zugeordneten Seite die Diffusionskanäle (7, 8) eingebracht sind, wobei die Stege (9, 10) der Kanäle metallisiert sind.

2. Mikrobrennstoffzellensystem nach Anspruch 1, **dadurch gekennzeichnet, dass** die Breite (b) der Diffusionskanäle (7, 8) zwischen 1 und 300 µm, vorzugsweise zwischen 10 und 100 µm beträgt.

3. Mikrobrennstoffzellensystem nach einem der vorhergehenden Ansprüche, **dadurch gekennzeichnet,**
**dass** die Diffusionskanäle (7, 8) mäanderförmig gestaltet sind, wobei von einer gasleitenden gasdurchlässigen Öffnung (5, 6) ausgehend der Diffusioriskanal (7, 8) zur Minimierung von Druckabfall im System mit wachsender Entfernung schmäler wird.

4. Mikrobrennstoffzellensystem nach Anspruch 1, **dadurch gekennzeichnet, dass** auf der der MEA (2) abgewandten Seite der Polymerschicht eine Metallmaske (15) angebracht ist.

5. Mikrobrennstoffzellensystem nach einem der vorhergehenden Ansprüche, **dadurch gekennzeichnet, dass** im Bereich der MEA (2) poröse Bauteile zur Einbindung von Reaktionswasser angeordnet sind.

6. Mikrobrennstoffzellensystem nach einem der vorhergehenden Ansprüche, **dadurch gekennzeichnet, dass** diese mit molekularen Wasserstoff oder Methanol als Brennstoff betreibbar ist.

7. Mikrobrennstoffzellensystem nach einem der vorhergehenden Ansprüche, **dadurch gekennzeichnet, dass** diese aus mehreren Brennstoffzellen besteht, wobei diese planar nebeneinander ele ktrisch verschaltet sind (Fig. 3, Fig. 4).

8. Mikrobrennstoffzellensystem nach einem der vorhergehenden Ansprüche, **dadurch gekennzeichnet, dass** kathodenseitig die Stromableiterfolie (3') mit einer Vielzahl von Öffnungen (5') zur Versorgung der Kathode mit Luftsauerstoff versehen ist.

9. Mikrobrennstoffzellensystem nach Anspruch 8, **dadurch gekennzeichnet, dass** die freiliegende Elektrodenoberfläche (16) zur Schmutz- und/oder Wasserabweisung zumindest bereichsweise imprägniert ist.

10. Mikrobrennstoffzellensystem nach Anspruch 7, **dadurch gekennzeichnet, dass** die anodenseitige Stromableiterfolie (4) mit der kathodenseitigen Stromableiterfolie (3) einer benachbarten Brennstoffzelle an mindestens zwei Punkten (17) miteinander verbunden sind.

11. Mikrobrennstoffzellensystem nach einem der vorhergehenden Ansprüche, **dadurch gekennzeichnet, dass** die Mikrobrennstoffzelle (1" ') flexibel ist und um ein Behältnis oder eine beliebige gekrümmte Oberfläche (29) zur Speicherung von Brennstoff gewickelt ist.

12. Verfahren zur Herstellung eines Mikrobrennstoffzellensystems nach einem der vorhergehenden Patentansprüche, **dadurch gekennzeichnet, dass** zumindest die anodenseitige Stromableiterfolie (4) mit den Stegen direkt auf die MEA (2) aufgebracht wird, wobei zur Herstellung einer Stromableiterfolie (3, 4) Vertiefungen für die Diffusionskanäle (7, 8) durch Laserbearbeitung, Nassätzen, reaktives Ionenätzen oder mechanische Verfahren wie Prägen, Pressen, Stanzen oder dergleichen hergestellt werden und die Polymerplatte vor ihrer Bearbeitung auf eine auf einem Wafer befindliche Metallfolie aufgebracht wird und nach der Herstellung der Vertiefungen und/oder Aufbringen der elektrisch leitfähigen Schichten der Wafer wieder entfernt wird oder dass dies in Rollprozessen geschieht oder auf einem Wafer zunächst eine Opferschicht/Opferstruktur aufgebracht wird und nach Fertigstellung der Stromableiterfolien zur Herstellung einer freitragenden Stromableiterfolie die Opferschicht/Opferstruktur entfernt wird.

13. Verfahren nach Anspruch 12, **dadurch gekennzeichnet, dass** das Aufbringen durch Verkleben und/oder Verpressen erfolgt.

14. Verfahren nach einem der beiden vorhergehenden Ansprüche, **dadurch gekennzeichnet, dass** vor dem Aufbringen der Stromableiterfolien auf die MEA in die MEA bereichsweise elektrisch isolierende Bereiche zur Isolation nebeneinander liegender Zellen hergestellt werden.

15. Verfahren nach einem der drei vorhergehenden Ansprüche, **dadurch gekennzeichnet, dass** vor dem Aufbringen der anodenseitigen Stromableiterfolie (4) eine zu der MEA (2) gehörige Methanol-Barrieren-Schicht (20) aufgetragen wird.

16. Verfahren nach einem der Patentansprüche 13 bis 15, **dadurch gekennzeichnet, dass** die Diffusionskanäle durch Aufbringen von Metallstrukturen auf eine im Wesentlichen ebene Polymerplatte erfolgt.

17. Verfahren nach einem der Patentansprüche 12 bis 16, **dadurch gekennzeichnet, dass** abschließend Öffnungen (5, 6) in die Stromableiterfolie (3, 4) eingebracht werden durch Laser- oder Wasserstrahlbohrungen oder reaktives Ionenätzen oder mechanische Verfahren.

18. Verfahren zur Herstellung eines Mikrobrennstoffzellensystems nach einem der Ansprüche 1 bis 11, **dadurch gekennzeichnet, dass** auf die MEA zunächst eine Opferstruktur aufgebracht wird, auf welche zur Ausbildung der Stromableiterfolie durch direkte Abscheide- und Strukturierungsverfahren weitere Schichten aufgebracht werden und anschließend die Opferstruktur zur Freilegung von Diffusionskanälen oder dergleichen entfernt wird.

19. Verfahren zur Herstellung einer Stromableiterfolie zur Verwendung in einem Mikrobrennstoffzellensystem nach einem der Patentansprüche 1 bis 11, **dadurch gekennzeichnet, dass** zur Herstellung der Stromableiterfolie (3, 4) Vertiefungen für die Diffusionskanäle (7, 8) durch Laserbearbeitung, Nassätzen, reaktives Ionenätzen oder mechanische Verfahren wie Prägen, Pressen, Stanzen oder dergleichen hergestellt werden und die Polymerplatte vor ihrer Bearbeitung auf einen Wafer befindliche Metallfolie aufgebracht wird und nach der Herstellung der Vertiefung und/oder Aufbringen der elektrisch leitfähigen Schichten der Wafer wieder entfernt wird oder dies in Rollprozessen geschieht oder auf einem Wafer zunächst eine Opferschicht/Opferstruktur aufgebracht wird und nach Fertigstellung der Stromableiterfolien zur Herstellung einer freitragenden Stromableiterfolie die Opferschicht/Opferstruktur entfernt wird.

20. Stromableiterfolie, hergestellt nach Patentanspruch 19.

## Claims

1. Micro fuel cell system (1) with a membrane electrode unit (MEA) (2) which is covered on both the cathode and anode sides by a current deviator foil (3, 4), the current deviator foils each having at least one gas-permeable opening (5, 6), diffusion channels (7, 8) being arranged on at least one of the current deviator foils (3, 4) on the side facing the MEA (2) to replace gas diffusion layers and alone to ensure the superdiffusion of gas on the MEA, the diffusion channels being connected to the gas-permeable opening (5, 6) for the transmission of gas, and ridges (9, 10) of the diffusion channels having an electrically conductive surface (11, 12) for contact with the MEA,
**characterised in that**
the current deviator foils (3, 4) having a polymer layer (13, 14), on the MEA-facing side of which the diffusion channels (7, 8) are made, the ridges (9, 10) of the channels being metallised.

2. Micro fuel cell system as in claim 1,
**characterised in that**
the width (b) of the diffusion channels (7, 8) is between 1 and 300 µm, preferably between 10 and 100 µm.

3. Micro fuel cell system as in one of the preceding claims,
**characterised in that**
the diffusion channels (7, 8) are meandrous in shape, the diffusion channel - starting from a gas-conducting opening (5, 6) - becoming narrower with increasing distance in order to minimise pressure loss in the system.

4. Micro fuel cell system as in claim 1,
**characterised in that**
a metallic mask (15) is applied on the side of the polymer layer that faces away from the MEA (2).

5. Micro fuel cell system as in one of the preceding claims,
**characterised in that**
in the area of the MEA (2) there are porous components for the integration of reaction water.

6. Micro fuel cell system as in one of the preceding claims,
**characterised in that**
it can be operated using molecular hydrogen or methanol as the fuel.

7. Micro fuel cell system as in one of the preceding claims,
**characterised in that**
it is made up of a number of fuel cells, these being electrically connected next to each other in a planar configuration (Fig. 3, Fig. 4).

8. Micro fuel cell system as in one of the preceding claims,
**characterised in that**
on the cathode side the current deviator foil (3 ') has a number of openings (5 ') to supply the cathode with atmospheric oxygen.

9. Micro fuel cell system as in claim 8,
**characterised in that**
the exposed surface (16) of the electrode is impregnated, at least in part, in order to deflect dirt and / or water.

10. Micro fuel cell system as in claim 7,
**characterised in that**
the current deviator foil (4) on the anode side is connected to the current deviator foil (3) on the cathode side of an adjacent fuel cell at at least two points (17).

11. Micro fuel cell system as in one of the preceding claims,
**characterised in that**
the micro fuel cell (1 " ') is flexible and is wrapped round a receptacle or a surface (29) that is curved as required for storing fuel.

12. Method of producing a micro fuel cell system as in one of the preceding claims,
**characterised in that**
at least the anode-side current deviator foil (4) is applied with the ridges directly on to the MEA (2), whereby, in order to produce a current deviator foil (3, 4), recesses for the diffusion channels (7, 8) are made by laser processing, wet etching or reactive ion etching, or by mechanical processes such as embossing, pressing, stamping or similar, and the polymer plate is applied, prior to being processed, on to a metal foil that is on a wafer, and - after the production of the recesses and / or the application of the electrically conductive layers - the wafer is removed, or **in that** this occurs in rolling processes, or a sacrificial layer / sacrificial structure is first applied to a wafer and, once the current deviator foils are complete, the sacrificial layer / sacrificial structure is removed in order to produce a self-supporting current deviator foil.

13. Method as in claim 12,
**characterised in that**
the application process is effected by sticking and / or pressing.

14. Method as in one of the two previous claims,
**characterised in that**
prior to the application of the current deviator foils to the MEA, electrically insulating areas are made in places in the MEA in order to insulate adjacent cells.

15. Method as in one of the three previous claims,
**characterised in that**
prior to the application of the anode-side current deviator foil (4), a methanol barrier layer (20) that belongs to the MEA (2) is applied.

16. Method as in one of claims 13 to 15,
**characterised in that**
the diffusion channels are effected by the application of metallic structures on to an essentially flat polymer plate.

17. Method as in one of claims 12 to 16,
**characterised in that**
openings (5, 6) are finally made in the current deviator foil (3, 4) by laser or water-jet drilling or by reactive ion etching or mechanical processes.

18. Method of producing a micro fuel cell system as in one of claims 1 to 11,
**characterised in that**
a sacrificial structure is first applied to the MEA, on to which structure are applied, in order to form the current deviator foil, further layers by means of direct deposition and structuring processes, and the sacrificial structure is then removed in order to expose diffusion channels or similar.

19. Method of producing a current deviator foil for use in a micro fuel cell system as in one of claims 1 to 11,
**characterised in that**
for the purpose of producing the current deviator foil (3, 4), recesses for the diffusion channels (7, 8) are made by laser processing, wet etching or reactive ion etching or by mechanical processes such as embossing, pressing, stamping or similar, and the polymer plate is applied, prior to being processed, on to a metal foil that is on a wafer, and - after the production of the recess and / or the application of the electrically conductive layers - the wafer is removed, or **in that** this occurs in rolling processes, or a sacrificial layer / sacrificial structure is first applied to a wafer and, once the current deviator foils are complete, the sacrificial layer / sacrificial structure is removed in order to produce a self-supporting current deviator foil.

20. Current deviator foil produced as in claim 19.

## Revendications

1. Système de micropiles à combustible (1) comportant une unité de membrane-électrode (MEA) (2), qui est recouverte respectivement du côté cathode et du côté anode par une feuille de dérivation de courant (3, 4), où les feuilles de dérivation de courant présentent respectivement au moins une ouverture perméable aux gaz (5, 6), moyennant quoi au moins sur l'une des feuilles de dérivation de courant (3, 4), du côté orienté vers la MEA (2), sont disposés des canaux de diffusion (7, 8) afin de remplacer les couches de diffusion du gaz, et de garantir à eux seuls la diffusion fine du gaz sur la MEA, où les canaux de diffusion sont reliés à l'ouverture perméable aux gaz (5, 6) afin d'assurer le passage du gaz, et les traverses (9, 10) des canaux de diffusion sont dotées d'une surface électroconductrice (11, 12) pour la mise en contact de la MEA,
**caractérisé en ce que** les feuilles de dérivation de courant (3, 4) présentent une couche polymère (13, 14) et, sur son côté orienté vers la MAE sont appliqués les canaux de diffusion (7, 8), où les traverses (9, 10) des canaux sont métallisées.

2. Système de micropiles à combustible selon la revendication 1, **caractérisé en ce que** la largeur (b) des canaux de diffusion (7, 8) est comprise entre 1 et 300 µm, de préférence entre 10 et 100 µm.

3. Système de micropiles à combustible selon l'une quelconque des revendications précédentes, **caractérisé en ce que** les canaux de diffusion (7, 8) sont configurés en forme de méandres, moyennant quoi, au fur et à mesure qu'on s'éloigne d'une ouverture perméable aux gaz et laissant passer les gaz (5, 6), le canal de diffusion (7, 8) devient de plus en plus étroit afin de réduire au minimum la chute de pression dans le système.

4. Système de micropiles à combustible selon la revendication 1, **caractérisé en ce que**, du côté opposé à la MEA (2) de la couche polymère, est appliqué un masque métallique (15).

5. Système de micropiles à combustible selon l'une quelconque des revendications précédentes, **caractérisé en ce que**, dans la zone de la MEA (2), sont disposés des composants poreux afin d'introduire de l'eau réactionnelle.

6. Système de micropiles à combustible selon l'une quelconque des revendications précédentes, **caractérisé en ce que** celui-ci peut être activé avec de l'hydrogène moléculaire ou du méthanol comme combustible.

7. Système de micropiles à combustible selon l'une quelconque des revendications précédentes, **caractérisé en ce qu'**il est constitué de plusieurs piles à combustible, celles-ci étant reliées par voie électrique de manière plane les unes à côté des autres (figure 3, figure 4).

8. Système de micropiles à combustible selon l'une quelconque des revendications précédentes, **caractérisé en ce que**, du côté cathode, la feuille de dérivation de courant (3') est dotée d'une pluralité d'ouvertures (5') permettant de délivrer à la cathode de l'oxygène atmosphérique.

9. Système de micropiles à combustible selon la revendication 8, **caractérisé en ce que** la surface de l'électrode dénudée (16) est imprégnée au moins en partie afin de repousser l'eau et/ou la poussière.

10. Système de micropiles à combustible selon la revendication 7, **caractérisé en ce que** la feuille de dérivation de courant du côté anode (4) est reliée à la feuille de dérivation de courant du côté cathode (3) d'une pile à combustible voisine en au moins deux points (17).

11. Système de micropiles à combustible selon l'une quelconque des revendications précédentes, **caractérisé en ce que** la micropile à combustible (1"') est flexible et est enroulée autour d'un réceptacle ou d'une surface incurvée (29) quelconque, afin d'emmagasiner le combustible.

12. Procédé de fabrication d'un système de micropiles à combustible selon l'une quelconque des revendications précédentes, **caractérisé en ce qu'**au moins la feuille de dérivation de courant du côté anode (4) est appliquée directement sur la MEA (2) à l'aide des traverses, moyennant quoi, afin de fabriquer une feuille de dérivation de courant (3, 4), des renfoncements pour les canaux de diffusion (7, 8) sont réalisés par traitement laser, décapage humide, décapage ionique réactif ou procédé mécanique tel que matriçage, compression, estampage ou similaire, et la plaque polymère est appliquée avant son traitement sur une feuille métallique se trouvant sur une plaquette, et, après la réalisation des renfoncements et/ou l'application des couches électroconductrices, la plaquette est de nouveau éliminée, ou **en ce que** cela se produit lors du processus d'enroulement, et, ensuite, sur une plaquette, on applique une couche sacrificielle/structure sacrificielle et, une fois les feuilles de dérivation de courant terminées, afin de fabriquer une feuille de dérivation de courant autoporteuse, la couche sacrificielle/structure sacrificielle est éliminée.

13. Procédé selon la revendication 12, **caractérisé en ce que** l'application est réalisée par collage et/ou compression.

14. Procédé selon l'une quelconque des revendications précédentes, **caractérisé en ce que**, avant l'application des feuilles de dérivation de courant sur les MEA, par section, on fabrique des zones électro-isolantes par section dans les MEA afin d'isoler les piles adjacentes les unes des autres.

15. Procédé selon l'une quelconque des trois revendications précédentes, **caractérisé en ce que**, avant l'application de la feuille de dérivation de courant côté anode (4), une couche barrière de méthanol (20) associée à la MEA (2) est appliquée.

16. Procédé selon l'une quelconque des revendications 13 à 15, **caractérisé en ce que** les canaux de diffusion sont obtenus en appliquant des structures métalliques sur une plaque polymère sensiblement plane.

17. Procédé selon l'une quelconque des revendications 12 à 16, **caractérisé en ce que**, pour finir, des ouvertures (5, 6) sont ménagées dans la feuille de dérivation de courant (3, 4) par perçage par le rayonnement laser ou par jet d'eau ou bien par décapage ionique réactif ou procédé mécanique.

18. Procédé de fabrication d'un système de micropiles à combustible selon l'une quelconque des revendications 1 à 11, **caractérisé en ce que**, sur la MEA, on applique tout d'abord une structure sacrificielle, sur laquelle, afin de former une feuille de dérivation de courant par un procédé de structuration et de séparation direct, d'autres couches sont appliquées, et enfin, la structure sacrificielle est éliminée afin de libérer les canaux de diffusion ou similaires.

19. Procédé de fabrication d'une feuille de dérivation de courant devant être utilisée dans un système de micropiles à combustible selon l'une quelconque des revendications 1 à 11, **caractérisé en ce que**, pour fabriquer la feuille de dérivation de courant (3, 4), des renfoncements pour les canaux de diffusion (7, 8) sont réalisés par un traitement laser, décapage humide, décapage ionique réactif ou procédé mécanique tel que matriçage, compression, estampage ou similaire, et la plaque polymère avant son traitement est appliquée sur une feuille métallique se trouvant sur une plaquette et, après la réalisation du renfoncement et/ou l'application des couches électroconductrices, la plaque est de nouveau éliminée, ou ceci est réalisé lors du processus d'enroulement ou, sur une plaquette, on applique tout d'abord une couche sacrificielle/structure sacrificielle et, une fois les feuilles de dérivation de courant terminées, afin de fabriquer une feuille de dérivation de courant autoporteuse, la couche sacrificielle/structure sacrificielle est éliminée.

20. Feuille de dérivation de courant, fabriquée selon la revendication 19.
